# EUROPEAN PATENT SPECIFICATION

(11) **EP 1 583 380 B1**
(45) Date of publication and mention of the grant of the patent: **23.05.2007**
(21) Application number: 05251869.3
(22) Date of filing: 24.03.2005
(51) Int. Cl.: H04L 9/12, H04Q 7/28, H04Q 7/38, H04L 29/06, H04Q 7/32

(54) **Call encryption in a TETRA network**
Anrufverschlüsselung in einem TETRA Netz
Encryptage d'un appel dans un réseau TETRA

(30) Priority: 24.03.2004 US 555906 P
(43) Date of publication of application: 05.10.2005
(73) Proprietor: MOTOROLA, INC., Schaumburg, IL 60196 (US)
(72) Inventor: Pedersen, Kristian Gronkjaer, Vaerlose Denmark 3500 (DK); Pappas, Scott J., Lake Zurich, Illinois 60047 (US); Langham, Timothy M., 328 Schaumburg Illinois 60173 (US)
(74) Representative: McLeish, Nicholas Alistair Maxwell

(56) References cited:
- US-A1- 2002 066 013
- US-A1- 2003 188 148
- "Terrestrial Trunked Radio (TETRA); Security; Synchronization mechanism for end-to-end encryption; ETSI EN 302 109" ETSI STANDARDS, EUROPEAN TELECOMMUNICATIONS STANDARDS INSTITUTE, SOPHIA-ANTIPO, FR, vol. TETRA-6, no. V111, October 2003 (2003-10), XP014015351 ISSN: 0000-0001

## Description

### Field of the invention

The invention relates to a method and apparatus for encrypting a call and in particular, but not exclusively, to encrypting a call in a TETRA (TErrestrial Trunked RAdio) cellular communication system.

### Background of the Invention

In a cellular communication system, a geographical region is divided into a number of cells each of which is served by base station. The base stations are interconnected by a fixed network which can communicate data between the base stations. A remote unit is served via a radio communication link by the base station of the cell within which the remote unit is situated.

As a remote unit moves, it may move from the coverage of one base station to the coverage of another, i.e. from one cell to another. As the remote unit moves towards a new base station, it enters a region of overlapping coverage of two base stations and within this overlap region it changes to be supported by the new base station. As the remote unit moves further into the new cell, it continues to be supported by the new base station. This is known as cell reselection or handover.

Communication from a remote unit to a base station is known as uplink, and communication from a base station to a remote unit is known as downlink.

The fixed network interconnecting the base stations is operable to route data between any two base stations, thereby enabling a remote unit in a cell to communicate with a mobile station in any other cell. In addition, the fixed network may comprise gateway functions for interconnecting to external networks such as the Public Switched Telephone Network (PSTN), thereby allowing remote units to communicate with landline telephones and other communication terminals connected by a landline. Furthermore, the fixed network comprises much of the functionality required for managing a conventional cellular communication network including functionality for routing data, admission control, resource allocation, subscriber billing, mobile station authentication etc.

Examples of cellular communication systems include both public cellular communication system such as the Global System for Mobile communication (GSM) and Professional Radio (PMR) systems such as TETRA (TErrestrial Trunked RAdio).

Specifically, although TETRA may be used as a public cellular communication system, it is designed to provide a number of features and services which are particularly suitable for private organisations or groups such as the emergency services.

For example, TETRA provides a number of features and services for managing and controlling group calls as well as for managing the membership of these groups. Other features and services provided by TETRA include, push-to-talk channel allocation, broadcast calls etc. Also, in addition to trunked mode operation wherein remote units communicate via a base station, TETRA provides for the possibility of communication which is communicated directly between remote units. This is known as Direct Mode Operation (DMO) and allows remote units to set up and maintain direct communication between these.

TETRA is a Time Division Multiple Access (TDMA) system wherein 25 kHz wide channels are further divided into four time slots which may be individually assignable. Each time slot has a duration of 14.167 msecs and four timeslots are combined into a time frame having a duration of 56.67 msecs. Each of the four time slots in a time frame may be individually allocated to the same or different remote units. Furthermore, the time frames are combined into multiframes comprising 18 time frames. Frame number 18 is reserved as a control frame wherein control information may be communicated during an active call.

TETRA furthermore provides for a high level of security which may be optimised for specific purposes. For example, calls in TETRA may be end-to-end encrypted in order to prevent eavesdropping or interception of the messages. Such encryption is invaluable for many public services including for example law enforcement organisations.

End-to-end encryption mechanisms for TETRA are described in ETSI (European Telecommunication Standards Institute) specification EN 302 109. ETSI EN 302 109 specifies a voice encryption and decryption mechanism wherein an encryption function of a transmitting unit generates encrypted data that is communicated to a receiving unit where the inverse operation is performed to re-generate the original data. The encryption and decryption functions are based on key streams generated by a key stream generator at the transmitting unit and receiving unit respectively. In order to have successful decoding, it is essential that the key stream of the receiving unit is synchronised with the key stream of the transmitting unit. For this purpose, ETSI EN 302 109 specifies the communication of Synchronisation Values (SVs) from the transmitter to the receiver.

Specifically, a number of SVs are transmitted at the beginning of a call or following cell reselection thereby synchronising the key stream generators. In addition, SVs are sent at intervals during the ongoing call in order to allow receiving units missing the initial transmissions of SVs to enter the call later. This is known as late entry. In addition the transmission of SVs during the call allows a receiving unit which looses synchronisation to re-acquire this during the call.

In accordance with ETSI EN 302 109, SVs are transmitted by half slot stealing wherein a time slot otherwise used for speech or data communication is used for transmission of the SVs. The stealing of half slots is dependent on a priority of the half slot. ETSI EN 302 109 does not prescribe when SVs should be transmitted during a call but suggests that an SV is sent after 0.25 seconds if the half slot is of low or no importance, after 0.5 seconds if the half slot has medium importance and after one second if the half slot has high importance.

When encryption is initiated in TETRA, either at call setup or cell reselection, the initial synchronisation values are also transmitted by half slot or full slot stealing which means that the audio must be truncated (replaced) or delayed until the synchronisation values have been transmitted. Truncation and delay is undesirable as it degrades the audio quality.

For example, following a cell reselection, the truncation of audio required for transmission of initial SVs results in a perceivable break or gap in the audio. For example, if four SVs are transmitted a gap of 120 msecs occur (corresponding to stealing of four ACELP block of 30ms of audio).

Therefore, it is desirable to minimize the truncation and delay by minimising the initial number of SV transmitted. However, reducing the number of synchronizing frames sent initially increases the risk of some receiving units missing the SV forcing these to wait for a late-entry which causes an undesired delay. For example, if important time slots are communicated, the next SV may not be transmitted for a whole second thereby resulting in a very noticeable delay or gap. However, reducing the interval between transmission of synchronisation values results in a significant degradation of audio quality.

Hence, an improved system for encryption of calls would be advantageous and in particular a system providing an improved encryption synchronisation performance allowing increased flexibility, improved user data quality (e.g. improved audio quality), reduced truncation/delay and/or faster late entry/ re-synchronisation would be advantageous.

### Summary of the Invention

Accordingly, the Invention seeks to preferably mitigate, alleviate or eliminate one or more of the above mentioned disadvantages singly or in any combination.

According to a first aspect of the invention, there is provided an apparatus for encrypting a call in a cellular communication system; the apparatus comprising; means for determining an elapsed time from a transmission of a previous encryption synchronisation message; means for transmitting a new encryption synchronisation message by reallocating a time interval from user data transmission to transmission of the new encryption synchronisation message; means for determining a first priority of the user data transmission; means for determining a first time threshold as a function of the first priority; and wherein the means for transmitting is operable to transmit the new encryption synchronisation message in response to the first time threshold; and the apparatus further comprises: means for modifying the function between the first priority and the first time threshold during the call.

The inventors of the current invention have realised that significant advantages may be achieved by adjusting the time between transmissions of encryption synchronisation messages. Accordingly, the invention allows time intervals between transmissions of encryption synchronisation messages to be modified during a call. In addition, the time interval may reflect the relative priority of the user data transmission to be replaced thereby allowing reduced signal quality degradation (for example increased voice quality). Furthermore, the modification of the function between the first priority and the first time threshold during a call may result in a reduced number of encryption synchronisation messages being transmitted and/or of a reduced delay/ truncation of the user data and/or increased speed of late entry or encryption synchronisation re-acquisition.

In particular, the invention may provide a dynamic trade-off between the speed of a late entry and the impact on the user data signal. For example, the trade off between late entry delays and audio quality for an audio call may be dynamically optimised for the current call characteristics.

According to a preferred feature of the invention, the means for modifying is operable to modify the function in response to a number of encryption synchronisation messages transmitted since a call event.

This provides for a modified timing to be applied in association with a call event for example by providing more frequent encryption synchronisation messages for a time interval following a call event which increases the probability of encryption synchronisation being lost. Thus, improved performance may be obtained by a faster late entry/ re-synchronisation in critical situations without impacting the long term audio quality. The faster late entry/ resynchronisation may further render it acceptable to allow an increased risk of synchronisation loss for the call event, for example allowing a reduced number of initial encryption synchronisation messages being transmitted.

According to a preferred feature of the invention, the means for modifying is operable to increase a value of the first time threshold for an increasing number encryption synchronisation messages transmitted since the call event. The probability of proper encryption synchronisation typically increases for increasing transmitted encryption synchronisation message and accordingly this may provide for the time interval between encryption synchronisation messages to be dynamically modified to match the changing probability.

According to a preferred feature of the invention, the means for modifying is operable to modify the function in response to a time elapsed since a call event. This provides for a modified timing to be applied in association with a call event for example by providing more frequent encryption synchronisation messages for a time interval following a call event that increases the risk of encryption synchronisation loss.

According to a preferred feature of the invention, the means for modifying is operable to increase a value of the first time threshold for an increasing time elapsed since the call event. The probability of proper encryption synchronisation typically increases for an increasing duration and accordingly this may provide for the time interval between encryption synchronisation messages to be dynamically modified to match the changing probability.

According to a preferred feature of the invention, the call event is a call setup. The invention may provide a modified timing for a limited time following a call setup. This may result in improved call setup performance while not impacting the long term performance and in particular the user data quality (e.g. audio quality). It may alternatively or additionally allow for fewer initial encryption synchronisation messages being transmitted.

According to a preferred feature of the invention, the call event is a cell reselection. The invention may provide a modified timing for a limited time following a cell reselection. This may result in improved cell reselection performance while not impacting the long term performance and in particular the user data quality (e.g. audio quality). It may alternatively or additionally allow for fewer initial encryption synchronisation messages being transmitted.

In some embodiments, the means for modifying is preferably operable to decrease a value of the first time threshold for an increasing number of encryption synchronisation messages transmitted since the call event and/or an increasing time elapsed since the call event. This may provide advantages in some embodiments, for example by providing less frequent encryption synchronisation messages for a time interval following a call event that reduces the risk of encryption synchronisation loss.

In some embodiments, the means for modifying is preferably operable to reset the first time threshold in response to a call event thereby providing a simple way of modifying the frequency of the transmission of encryption synchronisation messages.

According to a preferred feature of the invention, the means for determining the first time threshold comprises means for associating each possible value of the first priority value of the first priority with a time value of the first time threshold.

This provides for a practical implementation. The means for associating may for example be implemented as a look-up table, alternative variables of a software routine or a state machine having different associations for different states.

Preferably the means for transmitting is operable to transmit the new encryption synchronisation message if the elapsed time exceeds the first time threshold. In particular the means for transmitting may be operable to transmit the new encryption synchronisation message by replacing the first user data transmission occurring after the elapsed time exceeds the first time threshold.

According to a preferred feature of the invention, the function associates increasing values of the first time threshold with increasing values of the first priority. The function may be monotonically increasing such that the time value for a higher priority is higher or the same as the time value for a lower priority. This may ensure that the impact on user data transmissions is reduced for increased priority user data transmissions thereby improving the quality of the underlying user signal.

According to a preferred feature of the invention, the function is operable to associate a finite value of the first time threshold with a highest possible priority value of the first priority. This may ensure that an encryption synchronisation message is always sent after an elapsed time of the finite value thereby ensuring the possibility of encryption synchronisation messages being transmitted even during sequences of top priority user data transmissions.

According to a preferred feature of the invention, the apparatus further comprises means for transmitting a number of initial encryption synchronisation messages at initialisation of the call. This allows fast initial encryption synchronisation. The dynamic modification of the first time threshold may allow a reduced number of initial encryption synchronisation messages being sent while achieving acceptable performance.

According to a preferred feature of the invention, the apparatus further comprises means for transmitting a number of initial encryption synchronisation messages following cell reselection. This allows fast initial encryption synchronisation following cell reselection. The dynamic modification of the first time threshold may allow a reduced number of initial encryption synchronisation messages being sent while achieving acceptable performance.

According to a preferred feature of the invention, the means for transmitting is operable to transmit the new encryption synchronisation message by time slot stealing. The time slot stealing may be full slot stealing or half time slot stealing.

Preferably, the call is a voice call and the cellular communication system is a TETRA communication system. In particular the apparatus is preferably a base station or remote unit/ mobile station operable to implement encryption in accordance with ETSI standard EN 302 109.

The invention may provide improved encryption synchronisation performance for voice calls in a TETRA communication system by dynamically modifying the number of encryption synchronisation messages being transmitted to suit the current call characteristics thereby providing a dynamic optimisation of the trade off between audio quality degradation and re-synchronisation delay.

According to a second aspect of the invention, there is provided a method for encrypting a call in a cellular communication system; the method comprising the steps of: determining an elapsed time from a transmission of a previous encryption synchronisation message; transmitting a new encryption synchronisation message by reallocating a time interval from user data transmission to transmission of the new encryption synchronisation message;
means for determining a first priority of the user data transmission; determining a first time threshold as a function of the first priority; and wherein the step of transmitting comprises transmitting the new encryption synchronisation message in response to the first time threshold; and the method further comprises modifying the function between the first priority and the first time threshold during the call.

These and other aspects, features and advantages of the invention will be apparent from and elucidated with reference to the embodiment(s) described hereinafter.

### Brief Description of the Drawings

An embodiment of the invention will be described, by way of example only, with reference to the drawings, in which
FIG. 1 illustrates a system for communicating an encrypted call in accordance with an embodiment of the invention;
FIG. 2 illustrates an example of a controller for controlling transmission of encryption synchronisation messages in accordance with an embodiment of the invention;
FIG. 3 illustrates a flow chart of an example of a method of transmitting encryption synchronisation message in accordance with an embodiment of the invention.

### Detailed Description of a Preferred Embodiment of the Invention

The following description focuses on an embodiment of the invention applicable to a TETRA cellular communication system. However, it will be appreciated that the invention is not limited to this application but may be applied to many other communication systems.

An embodiment of the invention will be described wherein an encrypted call is performed between a transmitter and a receiver both being compliant with the ETSI specification EN 302 109 v1.1.1. For brevity and clarity, the embodiment is described with reference to a voice call but in other embodiments other call types may be supported such as for example a data call. The transmitter may specifically be part of a first subscriber terminal (such as a mobile station) and the receiver may specifically be part of a second subscriber terminal.

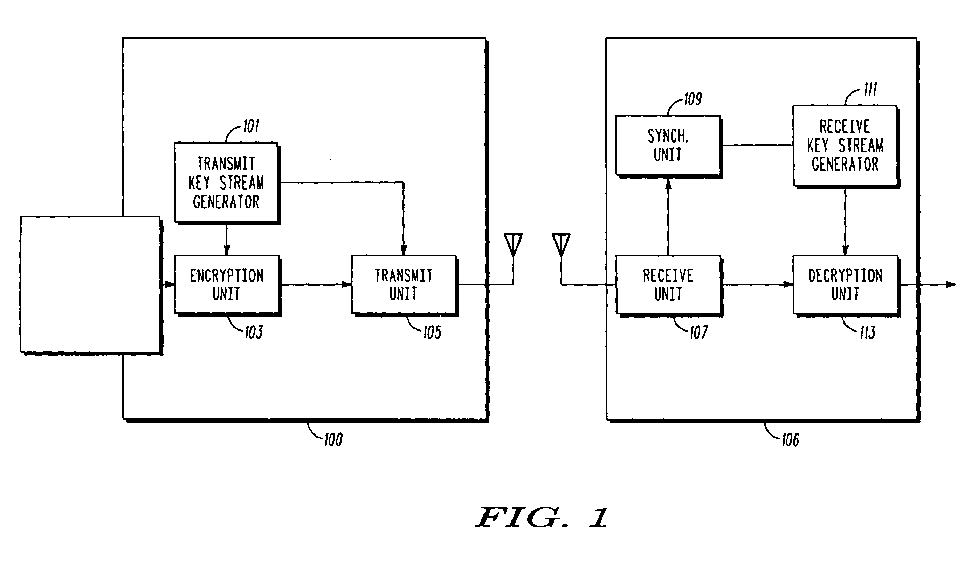

FIG. 1 illustrates a system for communicating an encrypted call in accordance with an embodiment of the invention.

A transmitter 100 comprises a transmit key stream generator 101 which generates a key stream used for encrypting a message. The transmit key stream generator 101 is initialised with an initialisation value that is time varying and not known externally to the transmitter. The transmit key stream generator 101 is coupled to an encryption unit 103 which receives voice data to be transmitted and encrypts this in accordance with a suitable encryption function. In particular, the encryption function combines the voice data with the key stream to generate encrypted audio data.

The transmitter further comprises a transmit unit 105 coupled to the transmit key stream generator 101 and the encryption unit 103. The transmit unit 105 receives the encrypted data from the encryption unit 103 and transmits this over the air interface. In addition, the transmit unit 105 receives encryption synchronisation values from the transmit key stream generator 101 and includes these in the transmitted bit stream. The synchronisation values allow the receiver to synchronise the decryption to the received data stream.

The synchronisation values are transmitted as encryption synchronisation messages by half-slot stealing wherein a user data transmission is partly or fully replaced by the encryption synchronisation message. In TETRA, the encryption synchronisation message is transmitted by replacing audio data in a full or a half time slot. Thus the transmit unit 105 is operable to replace the encrypted user data by synchronisation value data from the transmit key stream generator 101.

A receiver comprises a receive unit 107 which receives the data stream transmitted by the transmit unit. The transmitter and receiver further comprise the functionality required or desired for communicating over the air interface including modulators, amplifiers, control circuitry etc as is well known to the person skilled in the art.

The receive unit is coupled to a synchronisation unit 109 and is operable to extract the encryption synchronisation messages and to feed these to the synchronisation unit 109. In response, the synchronisation unit 109 generates initialisation values for a receive key stream generator 111. Based on the initialisation values, the receive key stream generator 111 generates a key stream which is synchronised with the key stream of the transmitter. The receive key stream generator 111 is coupled to a decryption unit 113 which is further coupled to the receiving unit 107. The decryption unit receives the encrypted audio and the key stream which is synchronised with the encrypted audio. Accordingly, it performs the inverse function of the function of the encryption unit 103 thereby generating a decrypted audio stream.

In order to provide initial synchronisation of the receive key stream generator 111, the transmitter transmits synchronisation values in connection with setting up of an encrypted call. Furthermore, following cell reselection, a number of synchronisation values are transmitted to establish encryption synchronisation between the transmitter and receiver as the timing differences typically results in a loss of synchronisation between e.g. two remote units.

In addition, synchronisation values are transmitted at intervals throughout the call. This ensures that a receiver that looses synchronisation may re-establish this thereby enabling it to continue the call. Furthermore, the continued transmission of synchronisation values allows a receiver to join the call after this has been setup. This is known as late entry.

As a receiver cannot establish encryption synchronisation until it receives a synchronisation value, the delay associated with synchronisation during a call may be reduced by reducing the time interval between the transmissions of synchronisation values. However, as transmission of synchronisation values takes place instead of user data transmissions by time (half) slot stealing, the audio quality is reduced by transmission of the synchronisation values. The quality degradation increases as the time interval between transmissions of synchronisation values is reduced. Accordingly, it is important to determine a suitable time interval (or frequency) between transmissions of synchronisation values to operate with an appropriate trade off between the quality degradation and re-synchronisation delays.

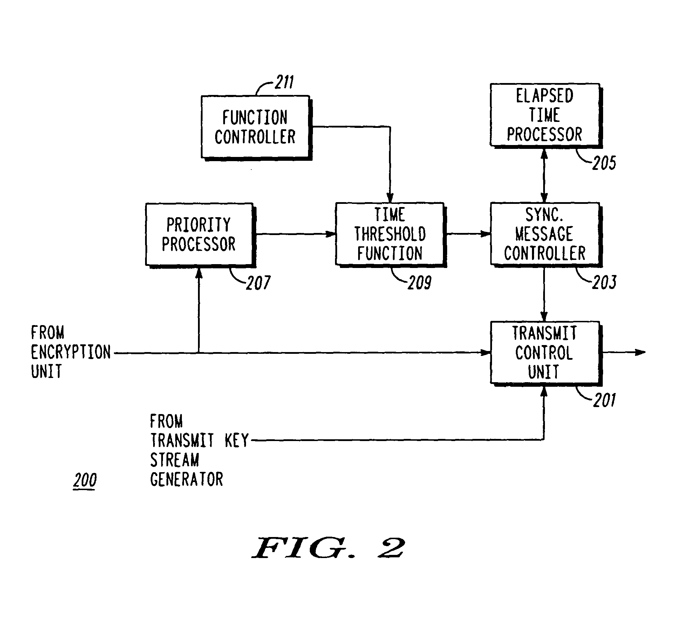

FIG. 2 illustrates an example of a controller 200 for controlling transmission of encryption synchronisation messages in accordance with an embodiment of the invention. In the described embodiment, one synchronisation value is transmitted in each encryption synchronisation message. The controller 200 may be implemented as part of the transmit unit 105 and will be described with reference to this exemplary embodiment.

The controller 200 comprises a transmit control unit 201 which controls whether time slots comprise user data in the form of encrypted audio data received from the encryption unit 103 or synchronisation values received from the transmit key stream generator 101. Thus, the transmit control unit 201 is operable to perform half time slot stealing in order to insert the synchronisation values into the transmitted bit stream.

The transmit control unit 201 is coupled to a synchronisation message controller 203 which controls the operation of the transmit control unit 201 and in particular controls when the encrypted audio data is replaced by synchronisation data.

The synchronisation message controller 203 is coupled to an elapsed time processor 205 which determines an elapsed time from a transmission of a previous encryption synchronisation message. Specifically, the elapsed time processor 205 comprises a timer which is reset by the synchronisation message controller 203 whenever a synchronisation value is transmitted.

The controller 200 further comprises a priority processor 207 which determines a priority of data to be transmitted. In TETRA, half slots may be allocated a priority in the form of an importance associated with the data of the time slot. Hence, each half slot has a priority value indicated by the parameter Half-Slot Importance (HSI) which is set by the audio encoder. Thus, half slots having little impact on the audio quality typically has a HSI value of Low or No Importance whereas half-slots having a higher impact on the audio quality have a HSI value of Medium or High.

In the embodiment, the priority processor 207 simply determines the priority of half slots by evaluating the HSI parameter of the audio half slots.

The priority processor 207 is coupled to a time threshold function 209 which determines a time threshold as a function of the priority of the half slot. In a simple embodiment, the time threshold function 209 is implemented as a look-up table wherein one time value for the time threshold is stored for each possible priority value. The time threshold function 209 is further coupled to the synchronisation message controller 203 which determines when to transmit synchronisation values in response to the time threshold. In a simple embodiment, the synchronisation message controller 203 simply determines if the elapsed time determined by the elapsed time processor 205 exceeds the time threshold value determined by the time threshold function 209, and if so the half slot of encrypted audio data is replaced by a synchronisation value.

It will be appreciated that the transmitter may simply discard the audio data of the half slot or may perform any other suitable operation on the audio data. For example, the apparatus may delay the audio data rather than discarding it.

The controller 200 further comprises a function controller 211 which is coupled to the time threshold function 209 and is configured to modify the function between the priority and the time threshold during the call. Thus, the function controller 211 may control the interval between synchronisation values for a given priority level such that this may be dynamically varied during a call.

In a simple embodiment, the time threshold function 209 consist in a look-up table comprising four data pairs corresponding to each of the possible priority values of a half slot:

| Priority (HSI) | Time Threshold (T) |
|---|---|
| No Importance | T1 |
| Low | T2 |
| Medium | T3 |
| High | T4 |

Hence, for a HSI of No Importance, the time threshold T is set to T1, for a HSI of Low the time threshold T is set to T2 etc.

In this embodiment, the synchronisation message controller 203 may simply evaluate if the elapsed time is larger than T and if so replace the half slot by the synchronisation value.

The time threshold for the highest possible priority value HSI=High is preferably a finite value T4. This ensures that a synchronisation value will be transmitted at least after an interval of T4 thereby providing an upper limit on the delay of a late entry or resynchronisation.

In the embodiment, the function controller 211 is operable to change the values of T1, T2, T3 and T4 by overwriting the currently stored values. Thus, a simple means is provided whereby the transmission of synchronisation values may be dynamically varied during a call.

It will be appreciated that the function controller 211 may implement any suitable algorithm or criteria for modifying the function between the priority and the time threshold. Preferably, the function controller 211 is operable to evaluate a parameter indicative of an increased possibility of encryption synchronisation loss and to reduce the time values accordingly. This will reduce the interval between synchronisation values when synchronisation loss is likely but without impacting the long term audio quality. For example, the function controller 211 may receive information indicating that the signal to noise ratio at the receiver has degraded and may accordingly reduce the time values.

The function controller 211 may advantageously be operable to modify the function between the priority and the time threshold in association with a call event such as a call setup or cell reselection.

Following a call setup or cell reselection, encryption synchronisation between the transmitter and receiver must be established. Accordingly, the transmitter may transmit a number synchronisation values before commencing or continuing the audio transmission. As the receivers may miss the transmissions due to for example fading conditions, the transmitter typically sends a plurality of synchronisation messages. However, if all of these messages are missed, the receiver has to perform a late entry which entails waiting for the next transmission of a synchronisation value.

During normal call operation, it is preferable that synchronisation values are transmitted relatively rarely as the loss of audio data results in significant quality degradation. ETSI EN 302 109 suggests that T1 and T2 are permanently set to 0.25 sec, T3 is permanently set to 0.5 sec and T4 is permanently set to 1 sec. However, this means that if the initial synchronisation values are missed, the receiver may have to wait for up to a second before acquiring encryption synchronisation. This is highly disadvantageous and accordingly a sufficient number of initial synchronisation values are transmitted to ensure that the probability of the receiver receiving at least one of the synchronisation values is sufficiently high. Unfortunately this results in a perceptible gap in the audio. For example, four initial synchronisation values are typically transmitted immediately after a cell reselection resulting in a 120 msec gap.

In accordance with embodiments of the invention, the function between the time threshold and the priority is changed for a duration following a call setup or a cell reselection. In particular, the time values are temporarily reduced in order to implement a shorter time interval between synchronisation values. For example, T1 and T2 may be temporarily set to 0.1 sec, T3 may be temporarily set to 0.25 sec and T4 may be temporarily set to 0.4 sec. Accordingly, the re-synchronisation and late entry delay is significantly reduced. In the specific example, late entry will occur after 0.4 sec at the latest. Although, this more aggressive synchronisation approach may degrade the audio quality, the degradation will only be for a relatively short time following call setup or reselection and will not affect the long term audio quality.

Furthermore, as the disadvantages of missing the initial synchronisation values are significantly mitigated, it is typically acceptable to allow a higher risk of this. Therefore, fewer initial synchronisation values may be sent leading to improved performance for receivers correctly receiving the first synchronisation values. For example, the number of synchronisation values transmitted may be reduced from four to two thereby reducing the associated gap by 60 msec.

It will be appreciated that any suitable algorithm or criterion for determining when to enter or exit the temporary state may be used. In one embodiment, the transmitter may enter the more aggressive state when a cell reselection occurs and stay there until a certain time interval has passed. This time interval may simply be measured by a timer. For example, following a cell reselection, the transmitter may switch to transmit synchronisation values according to the reduced threshold for five seconds after which it switches back to the normal time values.

In another embodiment, the transmitter may enter the more aggressive state when a cell reselection occurs and stay there until a certain number of synchronisation values have been transmitted. For example, following a cell reselection, the transmitter may switch to transmit synchronisation values according to the reduced thresholds until five synchronisation values have been transmitted at which point it will switch back to the normal time values.

It will be appreciated that any suitable way of implementing the function between the priority and the time threshold may be implemented. For example, the function may be implemented by a state machine wherein different values of T1, T2, T3 and T4 are implemented in each state. This implementation may for example be implemented by different subroutines of a software programme or may be implemented as a part of a single software routine wherein the time threshold values are represented by variables that are modified according to the state.

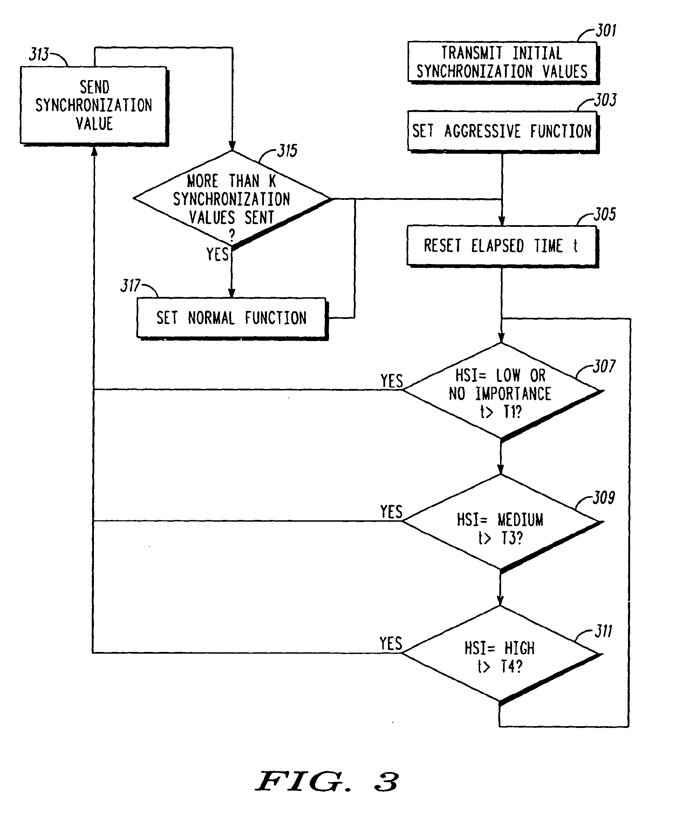

FIG. 3 illustrates a flow chart of an example of a method of transmitting encryption synchronisation message in accordance with an embodiment of the invention. In the example, the function between the time threshold and the priority is implemented as subsequent steps in the method where different possible values of the priority are evaluated in different steps.

The method starts in step 301 by a number of initial synchronisation values being transmitted immediately following a cell reselection. The method proceeds in step 303 by setting the function between the time threshold and the priority to aggressive, i.e. relatively low values. Specifically, the transmitter may set T1=T2=0.1 sec, T3=0.25 sec and T4=0.4 sec.

The method then proceeds in step 305 wherein an elapsed time timer t is reset.

Step 305 is followed by step 307 wherein it is evaluated if HSI is equal to low or No Importance and if t is larger than T1 (and thus T2). If so, the method proceeds in step 313 and otherwise it proceeds in step 309.

In step 309, it is evaluated if HSI is equal to Medium and if t is larger than T3. If so, the method proceeds in step 313 and otherwise it proceeds in step 311.

In step 311, it is evaluated if HSI is equal to High and if t is larger than T4. If so, the method proceeds in step 313 and otherwise it returns to step 307. Thus, the method iterates until a time slot occurs for which the elapsed time t exceeds the time value corresponding to the priority (HSI) of the time slot. However, as the threshold values are set aggressively, this will occur relatively frequently and the method will then proceed to step 313.

In step 313, a new synchronisation value is transmitted. Hence, when the time threshold values are set aggressively, the interval between transmissions of synchronisation values is relatively low.

Step 313 is followed by step 315 wherein it is evaluated if more than K synchronisation values have been transmitted since the cell reselection. If not, the method continues to step 305 wherein the elapsed timer is reset and a new interval is initiated using the aggressive time thresholds. However, if more than K synchronisation values have been transmitted, the method proceeds in step 317 wherein the normal threshold values are set. Specifically, the transmitter may set T1=T2=0.25 sec, T3=0.5 sec and T4=1 sec. The method then continues to step 305 wherein the elapsed timer is reset and a new interval is initiated using the normal time thresholds.

Thus, in accordance with the example, a number of initial synchronisation values are transmitted after a cell reselection followed by a relatively frequent transmission of synchronisation values. When K synchronisation values have been transmitted, the transmitter reverts back to normal operation wherein a less frequent transmission of synchronisation values takes place.

Hence, an improved synchronisation and late entry performance may be achieved for the cell reselection without impairing the long term audio quality.

It will be appreciated that steps 315 and 317 may be skipped when the method is operating in the normal time interval state.

The invention can be implemented in any suitable form including hardware, software, firmware or any combination of these. However, preferably, the invention is implemented at least partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units and processors.

Although the present invention has been described in connection with the preferred embodiment, it is not intended to be limited to the specific form set forth herein. Rather, the scope of the present invention is limited only by the accompanying claims. In the claims, the term comprising does not exclude the presence of other elements or steps. Furthermore, although individually listed, a plurality of means, elements or method steps may be implemented by e.g. a single unit or processor. Additionally, although individual features may be included in different claims, these may possibly be advantageously combined, and the inclusion in different claims does not imply that a combination of features is not feasible and/or advantageous. In addition, singular references do not exclude a plurality. Thus references to "a", "an", "first", "second" etc do not preclude a plurality.

## Claims

1. An apparatus for encrypting a call in a cellular communication system; the apparatus comprising;
means for determining an elapsed time from a transmission of a previous encryption synchronisation message;
means for transmitting a new encryption synchronisation message by reallocating a time interval from user data transmission to transmission of the new encryption synchronisation message;
means for determining a first priority of the user data transmission;
means for determining a first time threshold as a function of the first priority; and wherein
the means for transmitting is operable to transmit the new encryption synchronisation message in response to the first time threshold; and the apparatus further comprises
means for modifying the function between the first priority and the first time threshold during the call.

2. The apparatus as in claim 1 wherein the means for modifying is operable to modify the function in response to a number of encryption synchronisation messages transmitted since a call event.

3. The apparatus as in claim 2 wherein the means for modifying is operable to increase a value of the first time threshold for an increasing number encryption synchronisation messages transmitted since the call event.

4. The apparatus as in claim 1 wherein the means for modifying is operable to modify the function in response to a time elapsed since a call event.

5. The apparatus as in claim 4 wherein the means for modifying is operable to increase a value of the first time threshold for an increasing time elapsed since the call event.

6. The apparatus as in any preceding claim, wherein the means for determining the first time threshold comprises means for associating each possible value of the first priority with a time value of the first time threshold.

7. The apparatus as in any preceding claim, wherein the means for transmitting is operable to transmit the new encryption synchronisation message if the elapsed time exceeds the first time threshold.

8. The apparatus as in any preceding claim, wherein the function associates increasing values of the first time threshold with increasing values of the first priority.

9. The apparatus as in any preceding claim, wherein the function is operable to associate a finite value of the first time threshold with a highest possible priority value of the first priority.

10. The apparatus as in any preceding claim, wherein the means for transmitting is operable to transmit the new encryption synchronisation message by time slot stealing.

11. A method for encrypting a call in a cellular communication system; the method comprising the steps of:
determining an elapsed time from a transmission of a previous encryption synchronisation message;
transmitting a new encryption synchronisation message by reallocating a time interval from user data transmission to transmission of the new encryption synchronisation message;
determining a first priority of the user data transmission;
determining a first time threshold as a function of the first priority; and wherein
the step of transmitting further comprises transmitting the new encryption synchronisation message in response to the first time threshold; and the method further comprises
modifying the function between the first priority and the first time threshold during the call.

12. A computer readable media tangibly embodying a program of instructions executable by a computer to perform a method for encrypting a call in a cellular communication system; the method comprising:
determining an elapsed time from a transmission of a previous encryption synchronisation message;
transmitting a new encryption synchronisation message by reallocating a time interval from user data transmission to transmission of the new encryption synchronisation message;
determining a first priority of the user data transmission;
determining a first time threshold as a function of the first priority; and wherein
the step of transmitting further comprises transmitting the new encryption synchronisation message in response to the first time threshold; and the method further comprises modifying the function between the first priority and the first time threshold during the call.

## Patentansprüche

1. Vorrichtung zum Verschlüsseln eines Anrufs in einem zellularen Kommunikationssystem, wobei die Vorrichtung Folgendes aufweist:
Mittel zur Feststellung einer abgelaufenen Zeit von einer Übertragung einer vorherigen Verschlüsselungssynchronisationsnachricht;
Mittel zur Übertragung einer neuen Verschlüsselungssynchronisationsnachricht durch Neuzuteilung eines Zeitintervalls von einer Benutzerdatenübertragung zu der Übertragung der neuen Verschlüsselungssynchronisationsnachricht;
Mittel zur Feststellung einer ersten Priorität der Benutzerdatenübertragung;
Mittel zur Feststellung eines ersten Zeitschwellenwerts in Abhängigkeit von der ersten Priorität; und
**dadurch gekennzeichnet, dass**
das Mittel zur Übertragung derart arbeitet, dass es die neue Verschlüsselungssynchronisationsnachricht ansprechend auf den ersten Zeitschwellenwert überträgt; und dass die Vorrichtung des Weiteren
Mittel zur Modifizierung der Abhängigkeit zwischen der ersten Priorität und dem ersten Zeitschwellenwert während des Anrufs aufweist.

2. Die Vorrichtung nach Anspruch 1, **dadurch gekennzeichnet, dass** das Mittel zur Modifizierung derart arbeitet, dass es die Abhängigkeit ansprechend auf eine Anzahl von Verschlüsselungssynchronisationsnachrichten, die seit dem Auftreten eines Anrufs übertragen wurden, modifiziert.

3. Die Vorrichtung nach Anspruch 2, **dadurch gekennzeichnet, dass** das Mittel zur Modifizierung derart arbeitet, dass es einen Wert des ersten Zeitschwellenwerts für eine ansteigende Anzahl von Verschlüsselungssynchronisationsnachrichten, die seit dem Auftreten des Anrufs übertragen wurden, erhöht.

4. Vorrichtung nach Anspruch 1, **dadurch gekennzeichnet, dass** das Mittel zur Modifizierung derart arbeitet, dass es die Abhängigkeit ansprechend auf eine Zeit, die seit dem Auftreten eines Anrufs abgelaufen ist, modifiziert.

5. Vorrichtung nach Anspruch 4, **dadurch gekennzeichnet, dass** das Mittel zur Modifizierung derart arbeitet, dass es den Wert des ersten Zeitschwellenwerts für eine ansteigende Zeit, die seit dem Auftreten des Anrufs abgelaufen ist, erhöht.

6. Vorrichtung nach einem der vorhergehenden Ansprüche, **dadurch gekennzeichnet, dass** das Mittel zur Feststellung des ersten Zeitschwellenwerts ein Mittel zur Zuordnung jedes möglichen Werts der ersten Priorität zu einem Zeitwert des ersten Zeitschwellenwerts aufweist.

7. Vorrichtung nach einem der vorhergehenden Ansprüche, **dadurch gekennzeichnet, dass** das Mittel zur Übertragung derart arbeitet, dass es die neue Verschlüsselungssynchronisationsnachricht überträgt, wenn die abgelaufene Zeit den ersten Zeitschwellenwert übersteigt.

8. Vorrichtung nach einem der vorhergehenden Ansprüche, **dadurch gekennzeichnet, dass** die Abhängigkeit ansteigende Werte des ersten Zeitschwellenwerts ansteigenden Werten der ersten Priorität zuordnet.

9. Vorrichtung nach einem der vorhergehenden Ansprüche, **dadurch gekennzeichnet, dass** die Abhängigkeit derart arbeitet, dass sie einen endlichen Wert des ersten Zeitschwellenwerts einem höchsten möglichen Prioritätswert der ersten Priorität zuordnet.

10. Vorrichtung nach einem der vorhergehenden Ansprüche, **dadurch gekennzeichnet, dass** das Mittel zur Übertragung derart arbeitet, dass es die neue Verschlüsselungssynchronisationsnachricht durch Stehlen eines Zeitschlitzes überträgt.

11. Verfahren zur Verschlüsselung eines Anrufs in einem zellularen Kommunikationssystem, wobei das Verfahren die folgenden Schritte aufweist:
Feststellung einer abgelaufenen Zeit von einer Übertragung einer vorherigen Verschlüsselungssynchronisationsnachricht;
Übertragung einer neuen Verschlüsselungssynchronisationsnachricht durch Neuzuteilung eines Zeitintervalls von einer Benutzerdatenübertragung zu der Übertragung der neuen Verschlüsselungssynchronisationsnachricht;
Feststellung einer ersten Priorität der Benutzerdatenübertragung;
Feststellung eines ersten Zeitschwellenwerts in Abhängigkeit von der ersten Priorität; und **dadurch gekennzeichnet, dass**
der Schritt der Übertragung des Weiteren die Übertragung der neuen Verschlüsselungssynchronisationsnachricht ansprechend auf den ersten Zeitschwellenwert umfasst; und dass das Verfahren des Weiteren
die Modifizierung der Abhängigkeit zwischen der ersten Priorität und des ersten Zeitschwellenwerts während des Anrufs umfasst.

12. Computerlesbarer Datenträger, der konkret ein Programm von von einem Computer ausführbaren Answeisungen enthält, um ein Verfahren zur Verschlüsselung eines Anrufs in einem zellularen Kommunikationssystem durchzuführen, wobei das Verfahren die folgenden Schritte umfasst:
Feststellung einer abgelaufenen Zeit von einer Übertragung einer vorherigen Verschlüsselungssynchronisationsnachricht;
Übertragung einer neuen Verschlüsselungssynchronisationsnachricht durch Neuzuteilung eines Zeitintervalls von der Benutzerdatenübertragung zu der Übertragung der neuen Verschlüsselungssynchronisationsnachricht;
Feststellung einer ersten Priorität der Benutzerdatenübertragung
Feststellung eines ersten Zeitschwellenwerts in Abhängigkeit von der ersten Priorität; und **dadurch gekennzeichnet, dass**
der Schritt der Übertragung des Weiteren die Übertragung der neuen Verschlüsselungssynchronisationsnachricht ansprechend auf den ersten Zeitschwellenwert umfasst; und dass das Verfahren des Weiteren
die Modifizierung der Abhängigkeit zwischen der ersten Priorität und dem ersten Zeitschwellenwert während des Anrufs umfasst.

## Revendications

1. Dispositif de chiffrage d'un appel dans un système de communication cellulaire; le dispositif comportant;
un moyen de détermination d'un temps écoulé depuis une transmission d'un message de synchronisation de chiffrement précédent;
un moyen de transmission d'un nouveau message de synchronisation de chiffrement en réaffectant un intervalle de temps à partir d'une transmission de données d'utilisateur à la transmission du nouveau message de synchronisation de chiffrement;
un moyen de détermination d'une première priorité à la transmission de données d'utilisateur;
un moyen de détermination d'un premier seuil de temps en fonction de la première priorité; et dans lequel
le moyen de transmission est utilisable en vue de transmettre le nouveau message de synchronisation de chiffrement en réponse au premier seuil de temps; et le dispositif comporte en outre
un moyen de modification de la fonction entre la première priorité et le premier seuil de temps lors de l'appel.

2. Dispositif selon la revendication 1 dans lequel le moyen destiné à la modification est utilisable pour la modification de la fonction en réponse à un certain nombre de messages de synchronisation de chiffrement transmis depuis un événement d'appel.

3. Dispositif selon la revendication 2 dans lequel le moyen destiné à la modification est utilisable pour l'augmentation d'une valeur du premier seuil de temps pour un nombre croissant de messages de synchronisation de chiffrement transmis depuis l'événement d'appel.

4. Dispositif selon la revendication 1 dans lequel le moyen destiné à la modification est utilisable pour la modification de la fonction en réponse à un temps écoulé depuis un événement d'appel.

5. Dispositif selon la revendication 4 dans lequel le moyen destiné à la modification est utilisable pour l'augmentation d'une valeur du premier seuil de temps pour un temps croissant écoulé depuis l'événement d'appel.

6. Dispositif selon l'une quelconque des revendications précédentes, dans lequel le moyen de détermination du premier seuil de temps comporte un moyen d'associer chaque valeur possible de la première priorité avec une valeur de temps du premier seuil de temps.

7. Dispositif selon l'une quelconque des revendications précédentes, dans lequel le moyen de transmission est utilisable pour la transmission du nouveau message de synchronisation de chiffrement lorsque le temps écoulé excède le premier seuil de temps.

8. Dispositif selon l'une quelconque des revendications précédentes, dans lequel la fonction associe des valeurs croissantes du premier seuil de temps avec des valeurs croissantes de la première priorité.

9. Dispositif selon l'une quelconque des revendications précédentes, dans lequel la fonction est utilisable pour associer une valeur finie du premier seuil de temps à une valeur de priorité potentielle la plus élevée de la première priorité.

10. Dispositif selon l'une quelconque des revendications précédentes, dans lequel le moyen de transmission est utilisable pour de transmettre le nouveau message de synchronisation de chiffrement par détournement de tranches de temps.

11. Procédé de chiffrage d'un appel dans un système de communication cellulaire; le procédé comportant les étapes consistant à:
déterminer un temps écoulé depuis une transmission d'un message de synchronisation de chiffrement précédent;
transmettre un nouveau message de synchronisation de chiffrement en réaffectant un intervalle de temps de transmission de données d'utilisateur à la transmission du nouveau message de synchronisation de chiffrement;
déterminer une première priorité de la transmission de données d'utilisateur;
déterminer un premier seuil de temps en fonction de la première priorité; et dans lequel
l'étape de transmission comporte en outre l'étape consistant à transmettre le nouveau message de synchronisation de chiffrement en réponse au premier seuil de temps; et le procédé comporte en outre l'étape consistant à
modifier la fonction entre la première priorité et le premier seuil de temps lors de l'appel.

12. Support lisible par un ordinateur intégrant de façon tangible un programme d'instructions exécutables par un ordinateur afin d'exécuter un procédé pour le chiffrage d'un appel dans un système de communication cellulaire; le procédé comportant les étapes consistant à:
déterminer un temps écoulé depuis une transmission d'un message de synchronisation de chiffrement précédent;
transmettre un nouveau message de synchronisation de chiffrement en réaffectant un intervalle de temps de transmission de données d'utilisateur à la transmission du nouveau message de synchronisation de chiffrement;
déterminer une première priorité de la transmission de données d'utilisateur;
déterminer un premier seuil de temps en fonction de la première priorité; et dans lequel
l'étape de transmission comporte en outre l'étape consistant à transmettre le nouveau message de synchronisation de chiffrement en réponse au premier seuil de temps; et le procédé comporte en outre l'étape consistant à modifier la fonction entre la première priorité et le premier seuil de temps lors de l'appel.
